(19) Europäisches Patentamt
European Patent Office
Office européen des brevets

(11) Veröffentlichungsnummer: **0 087 762**
**B1**

(12) **EUROPÄISCHE PATENTSCHRIFT**

(45) Veröffentlichungstag der Patentschrift:
26.02.86

(51) Int. Cl.⁴: **F 27 D 1/16, C 04 B 35/66,**
**F 27 B 1/14**

(21) Anmeldenummer: 83101792.6

(22) Anmeldetag: 24.02.83

(54) Verfahren zur Verbesserung der Haltbarkeit feuerfester Zustellungen von metallurgischen Öfen.

(30) Priorität: 26.02.82 DE 3206892

(43) Veröffentlichungstag der Anmeldung:
07.09.83 Patentblatt 83/36

(45) Bekanntmachung des Hinweises auf die Patenterteilung:
26.02.86 Patentblatt 86/9

(84) Benannte Vertragsstaaten:
AT BE CH DE FR GB IT LI NL SE

(56) Entgegenhaltungen:
EP - A - 0 007 657
CH - A - 297 909
DE - A - 1 583 971
DE - A - 2 554 526
DE - A - 2 624 299
DE - A - 2 912 771
DE - B - 1 127 269

F. HARDERS und S. KIENOW: "Feuerfestkunde", 1960,
Springer Verlag, Heidelberg, DE.

(73) Patentinhaber: Glenanth-Werke Hochstein AG,
Postfach 90, D-6752 Winnweiler/Pfalz (DE)
Patentinhaber: Buchholz & Cie., Postfach 227,
D-6660 Zweibrücken (DE)
Patentinhaber: Römheld & Moelle GmbH, Postfach 3520,
D-6500 Mainz 1 (DE)
Patentinhaber: Giesserei Trikes GmbH, Inzlinger
Strasse 51, D-7850 Lörrach 2 (DE)
Patentinhaber: Firma Christian Helbling,
Schwarzwaldstrasse 7, D-7592 Renchen (DE)
Patentinhaber: Gebr. Pfeiffer AG, Postfach 3080,
D-6750 Kaiserslautern (DE)

(72) Erfinder: Orths, Kurt, Dr., Kastanienhof 1,
D-4030 Ratingen (DE)

(74) Vertreter: Patentanwaltsbüro Cohausz & Florack,
Schumannstrasse 97, D-4000 Düsseldorf 1 (DE)

## Beschreibung

Die Erfindung betrifft ein Verfahren zur Verbesserung der Haltbarkeit feuerfester Zustellungen von metallurgischen Öfen zum Schmelzen und Warmhalten, insbesondere von Eisenund Stahl und ein dafür geeignetes Versiegelungsgemisch.

Aus den Beobachtungen und wissenschaftlichen Untersuchungen ergibt sich, daß die Lebensdauer einer feuerfesten Zustellung ganz entscheidend von Vorgängen beeinflußt wird, die in der ersten Zeit nach Inbetriebnahme des Ofens nach seiner Neuzustellung, d.h. beim ersten Kontakt der feuerfesten "jungfräulichen" Zustellung mit flüssigem Metall ablaufen. Bei diesen Vorgängen und Reaktionen hat die Entstehung von Metalloxiden in und auf der Metallschmelze und deren Eindringen in die Oberfläche der Zustellung und ihre Reaktion mit dem Zustellungsmaterial überragende Bedeutung.

Bei Einsatz festen Metalls in einen Schmelzofen wird besonders viel Rost und Zunder eingebracht, wenn die Oberfläche des Metalleinsatzes groß ist. Das ist beim Einsatz von Stanzabfällen, Spänen, kleinstückigem Schrott oder dergleichen der Fall. Der durch den Einsatz hindurchrieselnde Rost führt zu lokal verstärkter Verschlackung und Tränkung des Futters im Unterofen. Bei kaltem Einsatz, beispielsweise in einen Drehtrommelofen, wird schon während des Beschickens ein- Rostabrieb erzeugt, der durch die Beschickung hindurch in dem geneigten Ofen auf die tiefste Stelle hindurchrieselt. Bei Inbetriebnahme des Ofens, d.h. nach Einschalten der Brenner zum Aufheizen des kalten Einsatzes wird außerdem eine große Menge von Zunder gebildet. Wenn wie üblich nach einer gewissen Vorwärmperiode der Ofen in schaukelnde bzw. drehende Bewegung gesetzt wird, wird dieser Zunder abgerieben und rieselt ebenfalls auf die bei Neuzustellung noch "jungfräuliche" Oberfläche der feuerfesten Zustellung. Gleiche Vorgänge spielen sich in Schmelzöfen, wie Tiegelöfen, Lichtbogenöfen, Flammöfen und dergleichen ab.

Die aus körnigen Haufwerken aus feuerfesten Materialien durch Stamafen, Rütteln oder ähnliche Verdichtungsmaßnah-men gebildeten feuerfesten Zustellungen von metallurgischen Öfen werden zur Inbetriebnahme in situ gesintert. Die Körner werden oberflächlich angeschmolzen und verkleben miteinander. Man wählt ein Kornspektrum, das eine sehr hohe Packungsdichte sichert. Dadurch kann aber nur eine Annäherung an den monolithischen Zustand der Zustellung erreicht werden. In jedem Fall ist die Zustellung nach dem Sintern sowohl an ihrer Oberfläche als auch im Innern porös. Die Kornzwischenräume, d.h. das Porenvolumen, beträgt in der Regel mindestens etwa 20 bis 25%. In diese Poren dringen Metall und Schlacke im Laufe der ersten Stunden nach Inbetriebnahme des Ofens ein. Bei intermittierendem Betrieb, d.h. beim Abkühlen und Wiederaufheizen, aber auch beim Chargieren von kaltem, insbesondere grobstückigem Metall auf die heiße Zustellung kommt es zu Rissen an der Oberfläche. Diese Risse werden bei der Erwärmung zwar wieder zugedrückt, und sie werden bei weiterem Betrieb auch durch Tränkung mit Schlackenbestandteilen rein physikalisch gesehen wieder geschlossen. Die hierbei unvermeidlichen chemischen Reaktionen der eindringenden Schlackenbestandteile mit dem Zustellungsmaterial führen jedoch zu lokalen Angriffen. An diesen Stellen wird im allgemeinen ein starkes Vordringen der Tränkung, Infiltration, Korrosion und Erosion der Zustellung beobachtet, was schließlich zur Außerbetriebnahme des Ofens führt.

Den verwendeten keramischen Massen wird meist ein geeignetes Sinterhilfsmittel zugesetzt. Bei Quarzitmassen ist dies in der Regel Borsäure oder Borsäureanhydrit. Bei basischen Massen wird im allgemeinen eine Ton- oder auch Phosahatbindung praktiziert. Damit wird der Zweck verfolgt, das Anschmelzen (Sintern) der Körner des feuerfesten Zustellungsmaterials zu erleichtern. Durch die den feuerfesten Massen zugemischren Sinterhilfsmittel wird aber die Porosität der Zustellung nicht verringert.

Bisherige Bemühungen, die Haltbarkeit einer feuerfesten Zustellung deutlich zu verbessern, betreffen in erster Linie eine Begrenzung der in der feuerfesten Masse zuzulassenden Flußmittel, z.B. Alkalien. Diese Gehalte sind im allgemeinen auf maximal 0,2% begrenzt (vgl. z.B. J. Sczimarowsky und U. Agst: Die feuerfesten Baustoffe 1967, dort z.B. S. 121, sowie Svenska Silika, Stamafmassen-Tagung 1976, Düsseldorf, dort S. 44, Tabelle 2, S. 201. Ferner K.-H. Brockmeier, Induktives Schmelzen, BBC 1966, Mannheim, dort S. 79). Dadurch soll die Hitzebeständigkeit der Zustellung erhöht werden.

Seit Beginn der industriellen Erschmelzung von Metallen in Öfen ist das Ofenfutter durchweg so aufgebaut, daß die Stoffe bzw. Schichten mit dem höchsten Schmelzpunkt, also mit der höchsten Feuerfestigkeit, an der zum Metall hingewandten Seite der Ofeninnenwand angeordnet sind. Niedriger schmelzende Grundmaterialien, die dann auch weniger kostspielig sind, werden dahinter angeordnet, und schließlich wird nach außen hin zur tragenden Konstruktion im allgemeinen mit Isoliermaterialien gearbeitet, die den niedrigsten Schmelzpunkt und die geringste Feuerfestigkeit haben. Diese Vorgehensweise ist schon in der Literatur des 19. Jahrhunderts verankert, beispielsweise "Handbuch der Eisen- und Stahlgießerei" von C. Geiger, Springer-Verlag, Berlin 1911 bzw. 1928, aber auch in der neueren Literatur, z.B. Docenko, V.I.: Litejnoe proizvodstvo 1979, Nr. 11, S. 32/33.

Zur Erhöhung der Haltbarkeit von Drehtrommelofenfutter ist eine Methode vorgeschlagen worden, die unter dem Namen "hot fritting" bekannt wurde. Hierzu wird eine hochschmelzende Masse in den Ofen eingebracht und sodann der Ofen auf Temperaturen erhitzt, die um 100-150°C über der normalen Betriebstemperatur liegen. Dabei wird die eingebrachte Masse teigig und bedeckt ein Segment des Drehtrommelofens in Längsrichtung der Achse. Dieser Vorgang muß sooft wiederholt werden, bis das Innere eines Drehtrommelofens mit lauter solchen Auflagen in Längsrichtung der Achse bedeckt ist. Der Ofenquerschnitt hat dann nicht mehr kreisrunde Form, sondern die Gestalt eines Polygons. Das Aufbringen einer derartigen hochschmelzenden Masse ist nicht durch Drehen des Ofens möglich, weil sich die zähflüssige Masse beim Drehen vom Untergrund ablösen würde und dann als "Wurst" im Ofen liegen bliebe. Das Einbringen so hochschmelzender Massen zur Innenauskleidung ist im übrigen mit einem unverhältnismäßig hohen Energieaufwand verbunden. (W. J. Roscow, Brit. Foundrym. 69 ″ (1976) Nr. 4, S. 81/88.)

Der Erfindung liegt nun die Aufgabe zugrunde, ein einfaches und wirksames Verfahren zur Verbesserung der Haltbarkeit von feuerfesten Zustellungen metallurgischer Öfen für schmelzflüssiges Metall zu schaffen und ein geeignetes Versiegelungsmaterial anzugeben.

Diese Aufgabe wird erfindungsgemäß durch die in den Ansprüchen gekennzeichneten Maßnahmen gelöst.

Grundgedanke der erfindungsgemäßen Lösung ist eine Versiegelung der an sich porösen Oberfläche der feuerfesten Zustellung durch ein geeignetes Material. Erfindungsge-mäß werden zur Versiegelung niedrig schmelzende Stoffe bzw. Stoffgemische verwendet, die mit dem feuerfesten Material der Zustellung unter starker Schmelzpunkterhöhung der Reaktionsprodukte an der Grenzfläche reagieren. Die Auswahl hat dabei insbesondere zu berücksichtigen, daß zwischen dem feuerfesten Material der Zustellung einerseits und den aufzubringenden Stoffen durch Reaktion nicht niedriger schmelzende Eutektika den Schmelzvorgang bestimmen. Wenn nämlich diese bei üblichen keramischen für die Benutzung als Geschirr vorgesehenen Erzeugnissen durchaus gewünschten Schmelzpunkterniedrigungen auftreten würden, müßte mit einem teilweisen oder vollständigen Abfließen der Auftragsschicht gerechnet werden und ein enormer Angriff auf das Futter dort auftreten, wo die abfließenden Massen sich sammeln. Die zu verwendenden Versiegelungsmaterialien müssen ferner guten Widerstand gegen die Entstehung von Wärmespannungsrissen aufweisen.

Die nach der Erfindung zur Anwendung kommenden Versiegelungsmaterialien, nämlich als eine Komponente der Pulvermischung dasselbe Material, aus dem die Zustellung besteht, und als zweite Komponente eine mit diesem reaktionsfähige Alkali- und/oder Erdalkaliverbindung mit cinem um mehr als 300°C unterhalb dem Schmelzpunkt des Zustellungsmaterials liegenden Schmelzpunkt, erfüllen insbesondere die Forderung nach guter Haftfestigkeit auf der Oberfläche der Zustellung, wobei ein Teil des zuerst flüssig werdenden Bestandteils der Auftrags-Pulvermischung in die Poren an der Oberfläche der Zustellung eindringt, der die sich auf der Oberfläche der Zustellung aufbauende Versiegelungsschicht an der Zustellung verankert.

Ein entscheidender Vorteil ergibt sich bei Anwendung des erfindungsgemäßen Verfahrens dadurch, daß sich die Versiegelungsschicht auf der dem Metall zugewandten Oberfläche der Zustellung quasi selbst erhält. Zwar wird auch die nach dem erfindungsgemäßen Verfahren aufgebrachte Versiegelungsschicht nach und nach abgetragen, jedoch geschieht dies einmal sehr gleichmäßig, und vor allem dringt der bei niedrigerer Temperatur als die feuerfeste Zustellung schmelzende Bestandteil aus der Versiegelungsschicht und der beim Aufbringen der Versiegelungsschicht bereits in die Poren an der Oberfläche der Zustellung eingedrungene Teil in dem Maße tiefer in die Zustellung ein wie sich die Temperatur in der Zustellung durch höhere Betriebstemperaturen im Ofen und/oder durch Verschleiß erhöht, so daß die jeweils an der Oberfläche der Zustellung befindlichen Poren von dem Versiegelungsgemisch stets verschlossen bleiben. Dadurch dringen auch bei längerer Betriebszeit des Ofens Metalloxide und Schlacke nicht in die Zustellung und können nicht die bekannte zerstörende Wirkung auf die Zustellung ausüben. Dieser Vorteil drückt sich in einer um etwa das 10 fache erhöhten Lebensdauer einer nach dem erfindungsgemäßen Verfahren hergestellten Ofen-Zustellung aus. Während die Futterhaltbarkeiten bei bestimmten Betriebsbedingungen zwischen 20 und 40 Chargen 5 lagen, können unter sonst gleichen Bedingungen nach dem erfindungsgemäßen Verfahren zugestellte Öfen 450 bis 520 Chargen überdauern.

Das erfindungsgemäße Verfahren weicht von vorerwähnten bisher praktizierten Zustellungsverfahren insofern grundlegend ab, als auf der dem Metall zugewandten Fläche nach der Erfindung eine Schicht aus einem bei wesentlich niedrigerer Temperatur als die Zustellung schmelzenden Material aufgebracht wird. Dagegen hat man wie schon erwähnt bisher die innerste Schicht immer aus dem höchstschmelzenden Material hergestellt.

Auch gegenüber Temperaturwechsel ist eine nach dem erfin-dungsgemäßen Verfahren hergestellte Versiegelungsschicht sehr Widerstandsfähig. Dies wird damit erklärt, daß die in der Grenzschicht, also in der heißesten Zone, vorhandene flüssige oder teigige Phase die Spannungen abbaut, die normalerweise zum Platzen oder Reißen der Zustellungs-Oberfläche führen. Selbst wenn solche versiegelten Oberflächen anreißen, wird doch beim Wiederaufheizen durch die früher schmelzende Komponente des Versiegelungsgemisches erneut eine Bindung hergestellt, die die Risse schließt.

Für die Auswahl der Stoffe, Alkali- und/oder Erdalkaliverbindungen, die in Verbindung mit dem Material, aus dem die Zustellung besteht, das Versiegelungsgemisch bilden gibt es eine Reihe von Möglichkeiten, wobei bevorzugte Kombinationen der die Pulvermischung bildenden Komponenten nach Menge und Zusammensetzung in den Ansprüchen angegeben sind. Durch Reaktion der Pulverkomponenten nach Erhitzen auf den unterhalb des Schmelzpunkts des Zustellungsmaterials liegenden Schmelzpunkt (Liquidus-Temperatur) friert das Versiegelungsgemisch an der Oberfläche der Zustellung an, wobei der früher schmelzende Bestandteil teilweise in die Oberfläche der Zustellung eindringt. Bevorzugt wird die Versiegelungsschicht derart erzeugt, daß das Versiegelungs-Pulvergemisch mit dem Hauptanteil ihrer Komponenten im Kornspektrum von 1 bis 3 mm in kaltem Zustand auf die heiße Oberfläche der Zustellung aufgebracht wird. Am geeignetsten ist es dabei, die Versiegelungsschicht unmittelbar anschließend an das Sintern der Zustellung zu erzeugen, wenn die Zustellung noch heiß ist und das kalt aufgebrachte Versiegelungs-Pulvergemisch zum Schmelzen bringt. Es ist dann auch keine zusätzliche Energie zum Aufschmelzen der Versiegelungsschicht erforderlich.

Die Temperatur, bei der die Versiegelungsschicht aufgeschmolzen wird, hängt maßgeblich vom Material der Zustellung ab. Bei Quarzit werden Temperaturen von 1300 bis 1400°C, bei basischem Futter, wie Magnesit und bei neutralem Futter, wie Korund, werden etwas höhere Temperaturen von etwa 1450°C eingestellt.

Das Versiegelungsgemisch kann auch mit Hilfe von Wasserglas auf die Außenwand einer Zustellungsschablone aufgebracht werden. Danach wird die Zustellung wie üblich mit Schablone gesintert. Bei dieser Sinterung schmilzt das auf die der Zustellung zugewandten Fläche der Schablone aufgebrachte Versiegelungsgemisch auf und verbindet sich mit der Oberfläche der Zustellung.

Besonders kostengünstig ist die Verwendung einer Zustellung aus Quarzit und/oder Klebsand in Verbindung mit einem Versiegelungsgemisch aus 60 bis 70% Quarzit und/oder Klebsand und 30 bis 40% als Rest Alkalisilikate enthaltende preiswerte zerkleinerte Glasabfälle.

Anstelle der genannten Gesteine und Abfallstoffe mit üblichen durch die geologischen Verhältnisse oder die Technologie des Herstellungsprozesses vorgegebenen Verunreinigungen und Begleitstoffen, wobei die Summe der Metalloxide allerdings auf maximal 5% zu beschränken ist, können natürlich auch die Verbindungen zur Verwendung kommen, aus denen sie bestehen.

## Patentansprüche

1. Verfahren zur Verbesserung der Haltbarkeit feuerfester Zustellungen von metallurgischen Öfen zum Schmelzen und Warmhalten, insbesondere von Eisen und Stahl, wobei eine Pulvermischung folgender Zusammensetzung:

40 bis 80 Gew.-% desselben Materials, aus dem die Zustellung besteht, und

60 bis 20 Gew.-% als Rest einer natürlichen und/oder synthetischen Alkali- und/oder Erdalkaliverbindung, deren Schmelzpunkt mehr als 300°C unterhalb desjenigen des Zustellungsmaterials liegt und die in Mischung mit dem Zustellungsmaterial einen zwischen dem Schmelzpunkt des Zustellungsmaterials und dem der Alkali- und/oder Erdalkaliverbindung liegenden Schmelzpunkt (Liquidus-Temperatur) hat, einschließlich üblicher Anteile von Regleitstoffen

auf die dem Ofeninnern zugewandten neuzugestellten Flächen der Zustellung aufgebracht und dort mindestens auf ihren Schmelzpunkt (Liquidus-Temperatur) erhitzt wird.

2. Verfahren nach Anspruch 1, dadurch gekennzeichnet, daß ein 20 bis 60% Alkaliund/oder Erdalkaliverbindungen enthaltender Stoff verwendet wird, dessen Schmelzpunkt mindestens 600°C niedriger liegt als der des Zustellungsmaterials.

3. Verfahren nach einem der Ansprüche 1 oder 2, dadurchgekennzeichnet, daß die auf die Oberfläche der Zustellung aufgebrachte Pulvermischung auf eine um etwa 100°C über ihrem Schmelzpunkt (Liquidus-Temperatur) liegende Temperatur erhitzt wird.

4. Verfahren nach einem der Ansarüche 1 bis 3, dadurchgekennzeichnet, daß die kalte Pulvermischung auf die heiße Oberfläche der gesinterten Zustellung aufgebracht wird.

5. Verfahren nach Anspruch 4, dadurch gekennzeichnet, daß unmittelbar nach dem Sintern der Zustellung die Pulvermischung auf die noch heiße Oberfläche der Zustellung aufgebracht wird.

6. Verfahren nach einem der Ansprüche 1 bis 5, dadurchgekennzeichnet, daß der Hauptanteil beider Komponenten der Pulvermischung im Kornspektrum zwischen 1 und 3 mm liegt.

7. Verfahren nach einem der Ansprüche 1 bis 6, dadurchgekennzeichnet, daß die Pulvermischung in einer Menge von 5 bis 10 kg je m² Oberfläche der Zustellung aufgebracht wird.

8. Verfahren nach einem der Ansprüche 1 bis 7, dadurchgekennzeichnet, daß eine Aufbauschicht von 1 bis 2 mm und eine 5 bis 10 mm tiefe Eindringschicht erzeugt wird.

9. Verfahren nach einem der Ansprüche 1 bis 8, dadurchgekennzeichnet, daß bei einer aus Quarzit bestehenden Zustellung eine Pulvermischung aus 40 bis 70 Gew.-% Quarzit und Rest in Form von Alkalisilikat enthaltenden zerkleinerten Glasabfällen verwendet wird.

10. Verfahren nach einem der Ansprüche 1 bis 8, dadurchgekennzeichnet, daß bei einer Zustellung aus Magnesit eine Pulvermischungaus 40 bis 60 Gew.-% Magnesit und Rest zu gleichen Teilen aus Talk (Steatit) und Bauxit jeweils in kalzinierrem Zustand verwendet wird.

11. Verfahren nach einem der Ansprüche 1 bis 8, dadurchgekennzeichnet, daß bei einer Zustellung aus Korund eine Pulvermischung aus 40 bis 60 Gew.-% Korund und Rest Wollastonit oder zu gleichen Anteilen Bauxit und Enstatit oder andere Silikate aus der Gruppe der Pyroxene, Amphibole, Serpentine oder Zeolithe jeweils im kalzinierten Zustand verwendet wird.

12. Verfahren nach einem der Ansprüche 1 bis 8, dadurchgekennzeichnet, daß bei einer Zustellung aus Mullit eine Pulvermischung aus 40 bis 70 Gew.-% Mullit und Rest Enstatit oder andere Silikate aus der Gruppe der Pyroxene, Amphibole, Serpentine oder Zeolithe im kalzinierten Zustand verwendet wird.

13. Pulvermischung zur Verbesserung der Haltbarkeit feuerfester Zustellungen von metallurgischen Öfen zum Schmelzen und Warmhalten, insbesondere von Eisen und Stahl, mit folgender Zusammensetzung.:

40 bis 80 Gew.-% desselben Materials, aus dem die Zustellung besteht, und

60 bis 20 Gew.-% als Rest einer natürlichen und/oder synthetischen Alkali- und/oder Erdalkaliverbindung, deren Schmelzpunkt mehr als 300° C unterhalb desjenigen des Zustellungsmaterials liegt und die in Mischung mit dem Zustellungsmaterial einen zwischen dem Schmelzpunkt des Zustellungsmaterials und dem der Alkali- und/oder Erdalkaliverbindung liegenden Schmelzpunkt (Liquidus-Temperatur) hat, einschließlich üblicher Anteile von Begleitstoffen.

14. Pulvermischung nach Anspruch 13, dadurch gekennzeichnet, daß sie 20 bis 60 Gew.-% eines Alkali- und/oder Erdalkaliverbindungen enthaltenden Stoffes enthält, dessen Schmelzpunkt mindestens 600° C niedriger liegt als der des Zustellungsmaterials.

15. Pulvermischung nach einem der Ansprüche 13 oder 14, dadurch gekennzeichnet, daß beide Komponenten im Kornspektrum zwischen 1 und 3 mm vorliegen.

16. Pulvermischung nach einem der Ansprüche 13 bis 15 zur Verbesserung der Haltbarkeit einer Zustellung aus Quarzit, dadurch gekennzeichnet, da59 sie aus 40 bis 70 Gew.-% Quarzit und Rest aus Alkalisilikat enthaltenden zerkleinerten Glasabfällen besteht.

17. Pulvermischung nach einem der Ansprüche 13 bis 15 zur Verbesserung der Haltbarkeit von Magnesit-Zustellungen, dadurch gekennzeichnet, daß sie aus 40 bis 60 Gew.-% Magnesit und Rest zu gleichen Teilen aus Talk (Steatit) und Bauxit jeweils im kalzinierten Zustand besteht.

18. Pulvermischung nach einem der Ansprüche 13 bis 15 zur Verbesserung der Haltbarkeit einer Zustellung aus Korund, dadurch gekennzeichnet, daß sie aus 40 bis 60 Gew.-% Korund und Rest Wollastonit oder zu gleichen Anteilen Bauxit und Enstatit oder andere Silikate aus der Grupae der Pyroxene, Amphibole, Serpentine oder Zeolithe jeweils im kalzinierten Zustand besteht.

19. Pulvermischung nach einem der Ansarüche 13 bis 15 zur Verbesserung der Haltbarkeit einer Zustellung aus Mullit, dadurch gekennzeichnet, daß sie aus 40 bis 70 Gew.-% Mullit und Rest Enstatit oder andere Silikate aus der Gruppe der Pyroxene, Amphibole, Serpentine oder Zeolithe jeweils im kalzinierten Zustand besteht.

**Claims**

1. Process for improving the durability of refractory linings of metallurgical furnaces for the melting and holding warm of, in particular, iron and steel, a powder mixture of the following composition.

40 to 80% by weight of the same material of which the lining consists, and 60 to 20% by weight, as the remainder, of a natural and/or synthetic alkali metal and/or alkaline earth metal compouhd, the melting point of which is more than 300 °C below that of the lining material and which, when mixed with the lining material, has a melting point (liquidus temperature) lying between the melting point of the lining material and that of the alkali metal and/or alkaline earth metal compound, including usual proportions of additives, being applied to those newly lined surfaces of the lining which face the furnace interior and being heated there to at least its melting point (liquidus temperature).

2. Process according to claim 1, characterised in that a material is used which contains 20 to 60% of alkali metal and/or alkaline earth metal compounds and the melting point of which is at least 600°C below that of the lining material.

3. Process according to one of claims 1 or 2, characterised in that the powder mixture applied to the surface of the lining is heated to a temperature which is about 100°C above its melting point (liquidus temperature).

4. Process according to one of claims 1 to 3, characterised in that the cold powder mixture is applied to the hot surface of the sintered lining.

5. Process according to claim 4, characterised in that, immediately after sintering of the lining, the powder mixture is applied to the still hot surface of the lining.

6. Process according to one of claims 1 to 5, characterised in that the major part of both components of the powder mixture is in the grain spectrum between 1 and 3 mm.

7. Process according to one of claims 1 to 6, characterised in that the powder mixture is applied in a quantity of 5 to 10 kg per m$^2$ of surface of the lining.

8. Process according to one of claims 1 to 7, characterised in that a build-up layer of 1 to 2 mm and a 5 to 10 mm deep penetration layer are produced.

9. Process according to one of claims 1 to 8, characterised in that, in the case of a lining consisting of quartzite, a powder mixture of 40 to 70% by weight of quartzite and a remainder in the form of comminuted waste glass containing alkali metal silicate is used.

10. Process according to one of claims 1 to 8, characterised in that, in the case of a lining of magnesite, a powder mixture of 40 to 60% by weight of magnesite and a remainder of equal parts of talc (steatite) and bauxite, each in calcinated state, is used.

11. Process according to one of claims 1 to 8, characterised in that, in the case of a lining of corundum, a powder mixture of 40 to 60% by weight of a corundum and a remainder of wollastonite or equal parts of bauxite and enstatite or other silicates from the groups comprising the pyroxenes, amphiboles, serpentines or zeolites/ each in the calcinated state, is used.

12. Process according to one of claims 1 to 8, characterised in that, in the case of a lining of mullite, a powder mixture of 40 to 70% by weight of mullite and a remainder of enstatite or other silicates from the group comprising the pyroxenes, amphiboles, serpentines or zeolites in the calcinated state is used.

13. Powder mixture for improving the durability of refractory linings of metallurgical furnaces for the melting and holding-warm of, in particular, iron and steel, having the following composition: 40 to 80% by weight of the same material of which the lining consists, and 60 to 20% by weight, as the remainder, of a natural and/or synthetic alkali metal and/or alkaline earth metal compound, the melting point of which is more than 300°C below that of the lining material and which, when mixed with the lining material, has a melting point (liquidus temperature) lying between the melting point of the lining material and that of the alkali metal and/or alkaline earth metal compound, including usual proportions of additives.

14. Powder mixture according to claim 13, characterised in that it contains 20 to 60% by weight of a material which contains alkali metal and/or alkaline earth metal compounds and the melting point of which is at least 600°C lower than that of the lining material.

15. Powder mixture according to one of claims 13 or 14, characterised in that the two components are present in a grain spectrum between 1 and 3 mm.

16. Powder mixture according to one of claims 13 to 15 for improving the durability of a lining of quartzite, characterised in that it consists of 40 to 70% by weight of quartzite and a remainder of a comminuted glass waste containing alkali metal silicate.

17. Powder mixture according to one of claims 13 to 15 for improving the durability of magnesite linings, characterised in that it consists of 40 to 60% by weight of magnesite and a remainder of equal parts of talc (steatite) and bauxite, each in the calcinated state.

18. Powder mixture according to one of claims 13 to 15 for improving the durability of a lining of corundum, characterised in that it consists of 40 to 60% by weight of corundum and a remainder of wollastonite or equal patts of bauxite and enstatite or other silicates from the group comprising the pyroxenes, amphiboles, serpentines or zeolites, each in the calcinated state.

19. Powder mixture according to one of claims 13 to 15 for improving the durability of a lining of mullite, characterised in that it consists of 40 to 70% by weight of mullite and a remainder of enstatite or other silicates from the group comprising the pyroxenes, amphiboles, serpentines or zeolites, each in the calcinated state.

## Revendications

1) Procédé pour améliorer la tenue de garniture réfractaire de four métallurgique pour la fusion et la tenue en température, notamment de fer et d'aoier selon lequel on applique sur les surfaces nouvellement garnies de la garniture, tournées vers l'intérieur du four, un mélange de poudre ayant la composition suivante -entre 40 à 80 % en poids du même matériau que celui constituant la garniture et -entre 60 et 20 % en poids comme complément d'une combinaison alcaline et/ou alcalino-terreuse naturelle et/ou de synthèse, dont le point de fusion est à plus de 300°C en-dessous de celui de la matière constituant la garniture, et qui en mélange avec la matière constituant la garniture, présente un poids de fusion (température du liquidus) compris entre le point de fusion de la matière constituant la garniture et celui de la combinaison alcaline et/ou alcalino-terreuse, ainsi que les fractions habituelles de matières additives, et on élève la température de cette application au moins jusqu'à son point de fusion (température du liquidus).

2) Procédé selon la revendication 1, caractérisé en ce qu'on utilise une matière contenant entre 20 et 60 % de combinaison alcaline et/ou alcalinoterreuse et dont le point de fusion est au moins à 600°C en-dessous de celui de la matière constituant la garniture.

3) Procédé selon l'une des revendications 1 ou 2, caractérisé en ce que le mélange de poudre appliqué sur la surface de la garniture, est chauffé à une température supérieure d'environ 100°C à sa température de fusion (température de,liquidus).

4) Procédé selon l'une des revendications 1 à 3, caractérisé en ce que le mélange froid de poudre est appliqué sur la surface chaude de la garniture frittée.

5) Procédé selon la revendication 4, caractérisé en ce qu'immédiatement après le frittage de la garniture, on applique le mélange de poudre sur la surface encore chaude de la garniture.

6) Procédé selon l'une des revendications 1 à 5, caractérisé en ce que la fraction principale des deux composants du mélange de poudre se situe dans une granulométrie comprise entre 1 et 3 mm.

7) Procédé selon l'une des revendications 1 à 6, caractérisé en ce que le mélange de poudre est appliqué à la surface de la garniture suivant une quantité de 5 à 10 kg par m$^2$.

8) Procédé selon l'une des revendications 1 a 7, caractérisé en ce qu'on réalise une couche en application de 1 à 2 mm et une couche de pénétration d'une profondeur de 5 à 10 mm.

9) Procédé selon l'une des revendications 1 à 8, caractérisé en ce que dans le cas d'une garniture composée de quartzite, on utilise un mélange de poudre comprenant entre 40 et 70 % en quartzite et le complément sous la forme d'un silicate alcalin contenant des débris de verre réduits en morceaux.

10) Procédé selon l'une des revendications 1 à 8, caractérisé en ce que pour une garniture en magnésite on utilise un mélange de poudre comprenant entre 40 et 60 % en poids de magnésite et le complément en parties égales de talc (stéatite) et de bauxite, chaque fois à l'état calciné.

11) Procédé selon l'une des revendications 1 à 8, caractérisé en ce que pour une garniture en corindon on utilise un mélange de poudre comprenant entre 40 et 60 % en poids de corindon et le complément en wollastoniteou de parties égales de bauxite et d'enstatite ou autressilicatesdu groupe des pyroxène, amphibole, serpentine ou zéolithe, respectivement à l'état calciné.

12) Procédé selon l'une des revendications 1 à 8, caractérisé en ce que pour une garniture en mullite, on utilise un mélange de poudre contenant entre 40 et 70 % en poids de mullite et le complément en enstatite ou autres silicates du groupe des pyroxène, amphibole, serpentine ou zéolithe à l'état calcine.

13) Mélange de poudre pour améliorer la tenue de garniture réfractaire de four métallurgique, pour la fusion et la tenue en température, notamment de fer et d'acier, ayant la composition suivante :
 - 40 à 80 % en poids du même matériau que celui constituant la garniture et
 - entre 60 et 20 % en poids comme complément d'une combinaison alcaline et/ou alcalino-terreuse naturelle et/ou de synthèse, dont le point de fusion est inférieur à plus de 300°C à celui de la matière constituant la garniture et le melange avec la matière de la garniture presente un point de fusion (température de, liquidus) compris entre le point de fusion de la matière constituant la garniture et le point de fusion de la combinaison alcaline et/ou alcalino-terreuse, ainsi que les teneurs habituelles en additifs.

14) Mélange de poudre selon la revendication 13, caractérisé en ce qu'il contient une matiéere avec entre 20 et 60 % en poi s de combinaison alcaline et/ou alcalino-terreuse dont le point de fusion est à au moins 600°C en dessous de celui de la matière de la garniture.

15) Mélange de poudre selon l'une des revendications 13 ou 14, caractérisé en ce que les deux composants sont situés dans une plage de granulométrie comprise entre 1 et 3 mm.

16) Mélange de poudre selon l'une des revendications 13 à 15 pour améliorer la tenue de la garniture en quartzite, caractérisé en ce qu'il se compose de 40 à 70 % en poids de quartzite et le complément en un silicate alcalin contenant des débris de verre en morceaux.

17) Mélange de poudre selon l'une des revendications 13 à 15 pour améliorer la tenue de la garniture en magnésite, caractérisé en ce qu'il contient entre 40 et 60 % en poids de magnésite et le complément en fractions égales de chaux (stéatite) et de bauxite, chaque fois à l'état calciné.

18) Mélange de poudre selon l'une des revendications 13 à 15 pour améliorer la tenue d'une garniture en corindon, caractérisé en ce qu'il contient entre 40 et 60 % en poids de corindon et le reste en wollastonite ou en parties égales de bauxite et d'enstatite ou autres silicates du groupe formé par le pyroxène, l'amphibole, la serpentine ou la zéolithe, chaque fois à l'état calciné.

19) Mélange de poudre selon l'une des revendications 13 à 15 pour améliorer la tenue d'une garniture en mullite, caractérisé en ce qu'il contient entre 40 et 70 % en mullite et le complément en enstatite ou autres silicates choisis dans le groupe formé par le pyroxène, l'amphibole, la serpentine ou la zéolithe, chaque fois à l'état calcine.